# EUROPEAN PATENT SPECIFICATION

(11) **EP 0 249 314 B1**
(45) Date of publication and mention of the grant of the patent: **10.02.1993**
(21) Application number: 87303267.6
(22) Date of filing: 14.04.1987
(51) Int. Cl.: G11B 15/68

(54) **Cassette auto-changers**
Automatischer Kassettenwechsler
Changeur de cassettes automatique

(30) Priority: 14.04.1986 JP 84189/86
(43) Date of publication of application: 16.12.1987
(73) Proprietor: SONY CORPORATION, Tokyo 141 (JP)
(72) Inventor: Ohtsuka, Takashi c/o Patents Division, Shinagawa-ku Tokyo 141 (JP)
(74) Representative: Thomas, Christopher Hugo

(56) References cited:
- EP-A- 0 145 268
- EP-A- 0 162 248
- FR-A- 2 366 661
- US-A- 2 941 739
- US-A- 3 060 413
- US-A- 3 536 194
- US-A- 3 999 823
- US-A- 4 285 623

## Description

This invention relates to cassette auto-changers, that is apparatus for automatically supplying and selectively reproducing a cassette, and more particularly, but not exclusively, to apparatus able to select a desired video tape cassette from a large number of cassettes housed in a housing block, to supply the selected cassette to a video tape recorder (VTR), and to return the cassette back to the housing block.

There are known cassette auto-changers for providing a selection from a large number of tape cassettes to a VTR based upon a predetermined programme. That is, a computer-type controller operates to control the auto-changer to provide sequential video reproduction of the information on a predetermined sequence of cassette tapes. Such auto-changers are typically employed in television broadcasting stations to reproduce commercials and the like in a desired sequence. Such auto-changers may also be employed to record information if the VTR is operated in the recording mode.

Typically such auto-changers have large magazines or housing blocks that contain a large number of video tape cassettes, and employ a delivery mechanism that is movable relative to the housing blocks and which can select a video cassette and transport it to the VTR. The auto-charger may include a plurality of VTRs in order to permit the sequential operation of the programme material with no interruptions.

In a typical broadcasting station, the programmes to be broadcast each day are sequentially broadcast using an auto-changer as described. However, during the broadcast of the programmes it may be desired to insert prerecorded commercials. If there are a large number of different commercials each day, it is necessary to provide as many as several thousand individual cassettes, thus, the requirement for high-speed action of the auto-changer is important.

One such known auto-changer has a cassette transferring device that deals with separate arrays or magazines of cassettes, which are arranged in side-by-side relationship with the transferring device operating between the two arrays of cassettes. Generally, the cassette transferring device has two mechanisms operating in respective opposite direction, but each only operating in its dedicated direction. Thus, in the typical operation, a desired cassette is moved into the transferring device using the appropriate direction drive element, is transported to the VTR, and then using the other of the two directional drive elements is picked up from the VTR after reproduction thereby permitting it to be reinserted back into its home slot. This presents a problem, however, when it is desired to rearrange the cassettes in the housing, because it is necessary to remove a cassette from the housing using the transferring device that operates in one direction, place it in the other, opposite housing,and then utilize the other element in the transferring device to select it and reposition it back into the original housing at another location. This, of course, becomes very complex and time consuming when there are a large number of cassettes to be rearranged.

Therefore, in utilizing this known auto-changer, when decisions are being made concerning the reproducing order of the cassettes and their housed positions, the programme must be arranged with a close watch on the frequency of use of the cassettes as well as their reproduction times. In addition, the path for transferring the cassettes within each block must be controlled to cut down on transfer time.

Patent Specification EPA-162 248 discloses control apparatus for controlling a plurality of video tape cassette players in which a plurality of cassette storage racks are spaced from a plurality of cassette playing machines and cassette transporting means are provided in the space therebetween. The cassette transporting means comprises a pair of racks, one above the other, through which a cassette can be transported from the store to the playing machines and from the playing machines back to the store. Motor driven actuators move the cassettes placed on the racks.

According to the invention there is provided apparatus for automatically supplying and selectively reproducing a cassette, the apparatus comprising:
a plurality of reproducing and/or recording units;
first and second housing blocks each of which includes a plurality of cassette bins for storing cassettes; and
a cassette transporting device movable between said first and second housing blocks for transporting said cassettes between said cassette bins of said first and second housing blocks and between said cassette bins and said reproducing and/or recording units; said cassette transporting device comprising:
at least one cassette receiving portion having two inlets provided at opposing sides thereof, with said opposing sides facing said first and second cassette housing blocks;
characterized in that said cassette transporting device further comprises carrying means for carrying a cassette into and out of said cassette receiving portion through said inlets; and
pushing means for pushing out a cassette housed in said cassette receiving portion through one of said inlets after the cassette has been partially carried from said cassette receiving portion towards said inlets by said carrying means.

In an embodiment of the present invention, a cassette transferring device has first and second cassette receiving portions for transfer of the cassette to and from a respective first and second cassette housing block, each of the cassette receiving portions being provided with a bi-directional cassette transport belt for pulling in a cassette from either the front or the rear of the cassette receiving portion, and a push-out mechanism at both the front and the rear of the cassette receiving portion for pushing out a cassette to a bin or slot for housing the cassette therein or into the delivery mechanism for a VTR. In addition, a kick lever mechanism is provided for pulling out the cassette from either of the first and second housing blocks for insertion into the cassette receiving portion.

The transport belts in the cassette transferring device are driven such that the cassette can be transferred in both forward and rearward directions in the cassette receiving portions, which in one embodiment is formed having two tiers.

In addition, the push-out mechanisms are also enabled to push out a cassette to a storage bin or to a tape delivery mechanism located either forward or rearward of the cassette receiving portion. Therefore, the cassette transferring device is capable of carrying-in or carrying-out a cassette from both the front and rear of the cassette transferring device and, thus, transfer of the cassettes to and from the first and second housing blocks as well as the reproducing unit is greatly facilitated.

The invention will now be described by way of example with reference to the accompanying drawings, throughout which like parts are referred to by like references, and in which:
Figure 1 is a perspective view of a cassette auto-changer according to the present invention;
Figures 2A and 2B are diagrammatic representations of a previously proposed cassette auto-changer;
Figure 3 is a perspective view showing positions of cassette handling mechanisms within a cassette transferring device in a cassette auto-changer according to the present invention;
Figures 4A and 4B are side elevational views representing the movement of a cassette as it is taken in and out of a bin in the autochanger of Figure 1;
Figure 5 is an exploded perspective view of a mechanism used for carrying a cassette into the cassette transferring device:
Figures 6A to 6C are side elevational views showing the operation of a cassette presser member in the auto-changer of Figure 1;
Figure 7 is an exploded perspective view of a cassette push-out mechanism;
Figure 8 is a side elevational view of the cassette push-out mechanism of Figure 7; and
Figure 9 is an exploded perspective view of a kick lever drive mechanism.

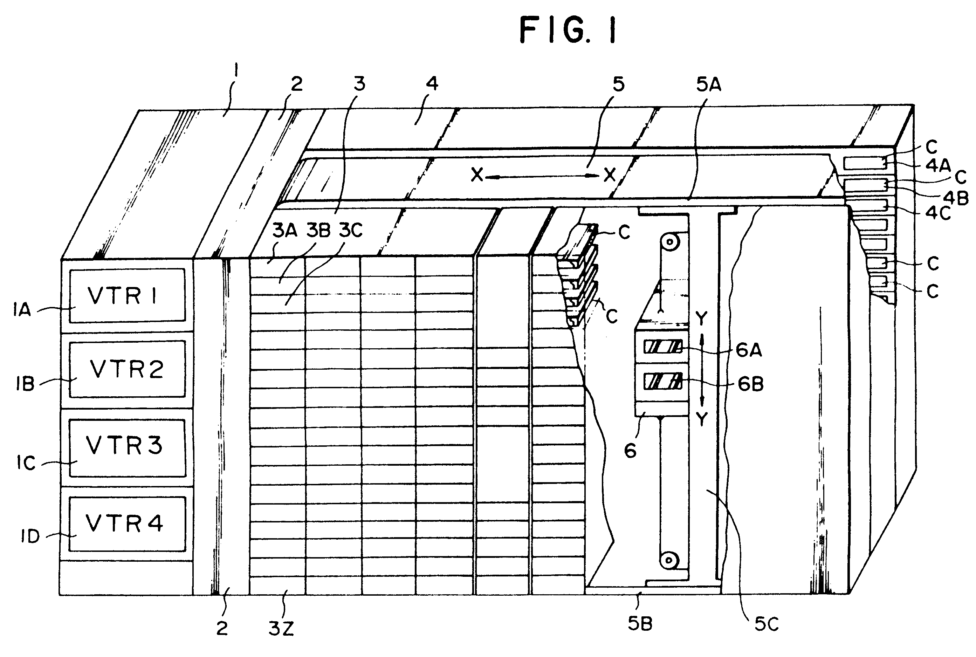

A complete automatic cassette loading or transferring apparatus or cassette auto-changer that can supply a large number of tape cassettes to a VTR system according to a predetermined programme is represented generally in Figure 1. The operation of this auto-changer is such that video reproduction is possible for an extended period of time based upon sequential selective reproduction of the cassettes stored in the system. A similar kind of automatic loading apparatus has been proposed in Japanese patent application 60/287271.

In the auto-changer of Figure 1, a video tape recording and reproducing block 1 includes four VTRs, 1A, 1B, 1C and 1D. A cassette delivery mechanism 2 is provided to deliver cassettes C to and from the VTRs 1. Two separate cassette housing blocks 3 and 4 are provided with a plurality of cassette slots or bins. Thus, the block 3 contains bins 3A, 3B, 3C, ... 3n and the block 4 contains bins 4A, 4B, 4C, ... 4n for retaining a respective plurality of the cassettes C. Located in a space between the two blocks 3 and 4 is a cassette transferring drive apparatus 5 that includes upper and lower guide rails 5A and 5B, respectively, for transporting a cassette transferring device 6, having cassette receiving portions 6A and 6B, longitudinally in an X-axis direction, as well as vertically in a Y-axis direction along a vertical guide rail 5C. More particularly, a drive mechanism (not shown) is provided to move the vertical guide rail 5C horizontally to a desired position along the X-axis by means of a timing belt (not shown), and also for moving the cassette transferring device 6 that is suspended from the vertical guide rail 5C vertically in a direction along the Y-axis. Such drive systems for moving the cassette transferring device 6 are known and it is not therefore shown in detail. The blocks 3 and 4 typically include cassette input/output portions on the front face of the respective blocks 3 and 4 to permit insertion and removal of cassettes C, with such input/output portions typically being in the form of hinged doors or the like.

The numbers of titles of the individual cassettes C housed in the blocks 3 and 4 and their addresses or positions therein are registered in a computer or similar memory unit, and the system is set up so that by supplying cassette reproduction orders to the computer, the cassette transferring device 6 can take out the cassettes C from the bins that are located at the predetermined addresses and then transfer them to predetermined VTRs, and during the same operation return a cassette C that has already been reproduced back to its original bin.

Television broadcasting stations typically employ such autochangers to reproduce prerecorded programmes, as well as to insert commercials into the programming and, thus, to optimize this system, which employs two banks or blocks 3 and 4, with the cassette transferring device 6 disposed therebetween and facing each block 3 and 4, the number of housed cassettes C needs to be increased while at the same time effectively reducing the transfer distance.

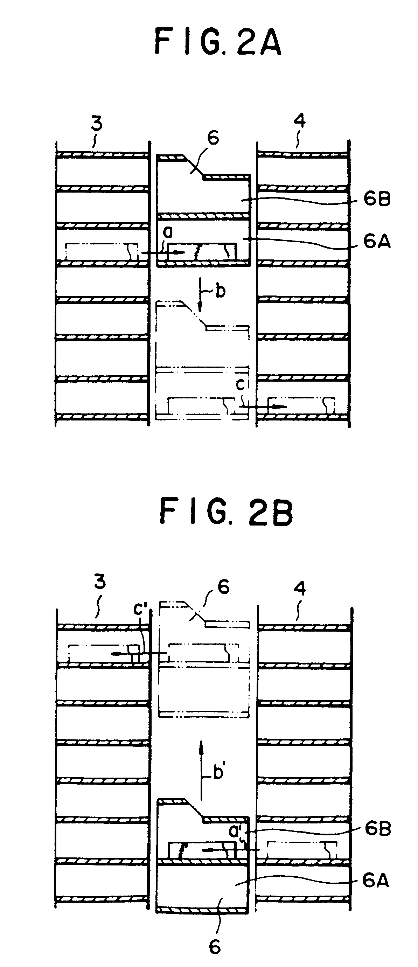

In the transferring device 6, the two separate cassette receiving portions 6A and 6B are provided, and turning to Figures 2A and 2B a side elevational view is presented, in which the operation of a previously proposed transferring device 6 is depicted. More particularly, in Figure 2A the blocks 3 and 4 are shown comprising the plurality of bins within which the cassettes C may reside, and the transferring device 6 has the two cassette receiving portions 6A and 6B. In the operation of this system, a cassette C is moved from the block 3 onto the cassette receiving portion 6A in the direction a, and then the transferring device 6 moves, for example, downwardly in the direction b. The individual cassette C may then be placed in a bin in the block 4 by transferring the cassette C out of the cassette receiving portion 6A in the direction c, which is the same as the direction a. Thus, it is seen that the cassette receiving portion 6A of the transferring device 6 is suitable only for transferring a cassette in one direction, for example, from the block 3 to the block 4. Of course, in actual use a cassette C is transferred to a VTR by moving the transferring apparatus 5 along the X-axis to the cassette delivery mechanism 2 and thence to the VTRs. The cassette receiving portion 6B operates to transfer the cassettes C only in the direction from the block 4 to the block 3, and this is shown in Figure 2B. More particularly, a cassette C in the block 4 may be transferred into the cassette receiving portion 6B in the direction a', the transferring device 6 is moved vertically in the direction b', and then the cassette C is transferred from the cassette receiving portion 6B into the block 3 in the direction c'. Again, it should be understood that this operation merely represents a transfer of a cassette C from one block 3 or 4 to the other in order to accomplish a rearrangement of the cassettes C, and just as typically a cassette C is transported to the cassette delivery mechanism 2 for insertion into the appropriate VTR.

Therefore, it may be seen that when it is desired to change the housing position of a specific cassette C that is located, for example, in the block 3 to another position within the same block 3, the specific cassette C is first carried to the block 4 and then subsequently relocated to the newly specified position in the block 3. Thus, control of the transferring device 6 becomes complex and, in addition, a long time is required to make the rearrangement.

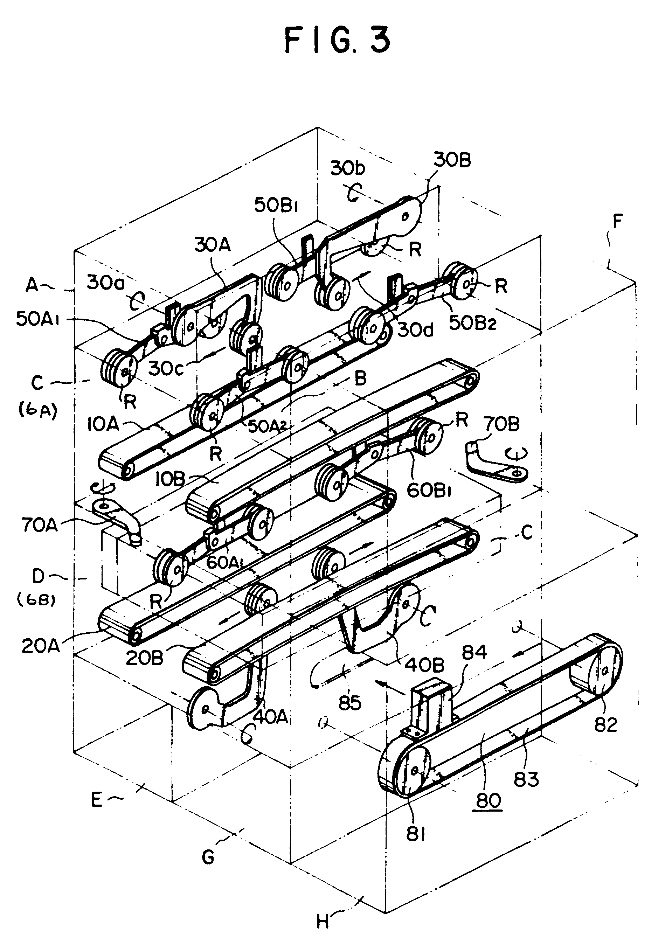

Therefore, as shown in Figure 3, in an auto-changer in accordance with the present invention a cassette transferring device 6 is provided that is divided generally into eight functional blocks, with such blocks being indicated by two-dot chain lines and denoted as A to H. More particularly, the blocks C and D form the cassette receiving portions similar to 6A and 6B as discussed above. It must be noted that there need not actually be specific blocks formed in the present transferring device 6, and that such blocks are provided herein in order to make the explanation easier. The block A contains the driving mechanism used to drive two transport belts 10A and 10B that are arranged in the block C, and a similar drive mechanism will be provided in the block G for driving transport belts 20A and 20B that are arranged in the block D. Push-out levers 30A and 30B are provided to push out a cassette C (not shown) located in the block C, and each push-out lever 30A and 30B is mounted for rotation on a respective shaft 30a and 30b, to be rotated in the direction as indicated by the arrow, by means of a drive mechanism, which will be explained below and which is located within the block B. Thus, the push-out levers 30A and 30B are arranged to swing in the direction indicated by arrows 30c and 30d, respectively, in order to discharge a cassette C housed in the block C in either the forward or the rearward direction. In previously proposed auto-changers movement in only a single direction is possible as explained above.

When a cassette C shown by the single-dot chain lines in Figure 3 housed in the block D is to be pushed out, the operation is performed by push-out levers 40A and 40B which are arranged in the lower side of the block D and which are operated by a drive mechanism (not shown) arranged mainly in the block E. The operation of the push-out levers 40A and 40B when causing the cassette C to move either in the forward or rearward direction is the same as explained hereinabove relative to the push-out levers 30A or 30B in the upper portion of the transferring device 6.

Also shown in Figure 3 are cassette presser members attached to the upper portions of the blocks C and D, wherein the individual cassettes C are received. More particularly, cassette presser members 50A1, 50A2 and 50B1, 50B2 are provided to press on a flat upper surface of a cassette C that is contained within the block C and cassette presser members 60A1 and 60B1 are provided to press on a flat upper surface of a cassette C contained within the block D. Cassette presser members 60A2 and 60B2 are not shown in Figure 3 in order to avoid making the figure confusingly crowded. The cassette presser members 60 are provided to make sure that the respective cassette C is in good contact with the transport belts 10A and 10B in the block C and 20A and 20B in the block D. Each of the cassette presser members 60 may be formed of four individual mechanisms such as 50A1, 50A2 and 50B1, 50B2, relative to the presser members in the block C, and the cassette presser members 60 for the block D are similarly formed of four elements. However, only the elements 60A1 and 60B1 are shown, with the other two being omitted in the interest of clarity.

Although not shown in Figure 3, each of the cassette presser members 50 and 60 is uniformly and constantly urged downwardly by means of springs (not shown) so that as the cassette moves, rollers R, which are rotatably mounted at the outer ends of the cassette presser members 50 and 60, can abut the ends of the housed cassette C for preventing it from coming out of contact with the appropriate drive structure in the cassette receiving portion 6A (the block C) or 6B (the block D). This operation is explained in detail below.

So-called kick levers 70A and 70B are formed on the transferring device 6 of Figure 3, and are used in the operation of pulling out a cassette C from the block 3 and the block 4, respectively. More particularly, the kick levers 70A and 70B are shown disposed relative to the block D and, although not shown, two similar levers are also provided relative to the block C. The kick levers 70A and 70B are independently operated by a drive mechanism (not shown) that is disposed on the top plate of the block H and located substantially within the block F. Thus, the kick lever 70A functions when a cassette C is to be taken into the block D from a bin in the block 3, and operates to actuate a presser member provided at the inlet of the bin so that the cassette C is caused to spring or be popped out of the bin opening. A suitable bin structure is described in detail in our Japanese patent application 61/10142 filed 27 January 1987.

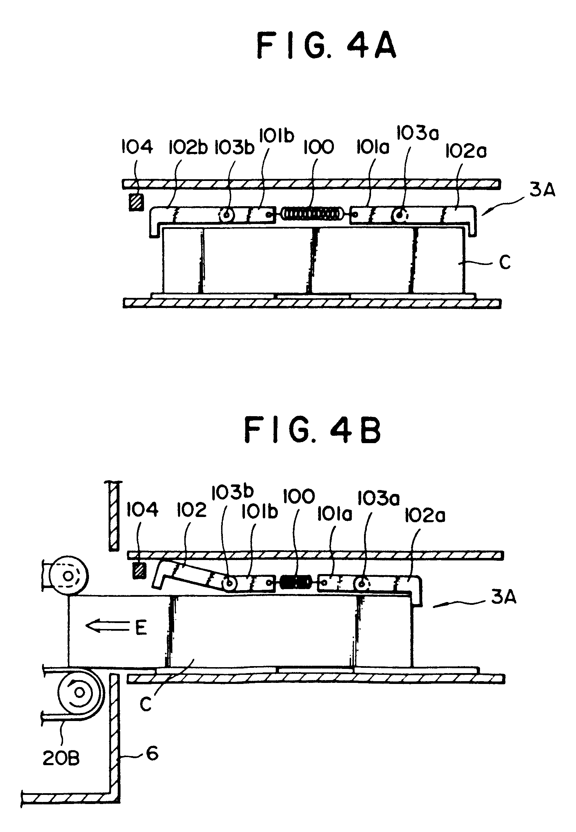

A similar suitable cassette retaining system is represented in Figures 4A and 4B in which it is seen that a cassette C is arranged within a bin 3A, for example, by means of front and rear engagement members 101a and 101b that tend to be drawn together by means of a spring 100, and which include stops 102a and 102b, respectively, that are pivotally attached by shafts 103a and 103b, respectively, to the engagement members 101a and 101b. A presser element 104 is provided arranged within the bin 3A and is arranged to be impacted or pressed by the kick lever 70A, whereby the stop 102b is pushed upwardly by means of a suitable mechanism (not shown), as indicated in Figure 4B. At the same time, this releases the cassette C from the fixed condition due to the release of the stop 102b. As a result, the cassette C is pushed outwardly in the direction E under the force of contraction of the spring 100 drawing the stop 102a inwardly and, thus, the cassette C is driven into the receiving opening of the transferring device 6 located in front of the bin 3A.

Therefore, in the operation of the apparatus of Figure 3, if the transport belts 20A and 20B are driven in the appropriate direction and the cassette C is taken into a cassette receiving portion 6B formed within the block D in Figure 3, for example, a bar-code reader assembly 80 in the block H will read a bar code on the side face of the cassette C, as it is carried into the block D. The bar-code reader assembly 80 may be formed of a bar-code sensor element 84 attached to a movable belt 83 that is disposed between two pulleys 81 and 82. An elongated slot or opening 85 is formed in a side wall of the block D so that the bar-code sensor element 84 can read the bar code on the side of the cassette C. The data that is read out is then fed to the computer that is used to control the entire system. The reason for the belt arrangement for the bar-code sensor element 84 and the elongated opening 85 will be discussed below.

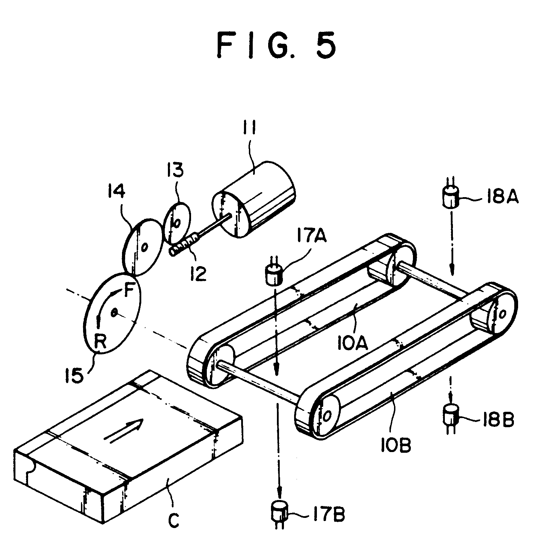

Turning now to Figure 5, the carrying-in belt mechanism for transporting a cassette C into the receiving opening of the transferring device 6 from one of the bins A, B, C, ... n of the block 3 is represented. This structure say be referred to as a cassette delivery mechanism. More specifically, the cassette C is shown being inserted in the direction indicated by the arrow and is first subjected to detection by a photoelectric sensor device 17A and 17B, which is arranged in front of the transport belts 10A and 10B. A second set of photoelectric sensor devices 18A and 18B are provided for cassette entry in the opposite direction. It is understood, of course, that a similar arrangement is provided relative to the transport belts 20A and 20B in the block D of Figure 3. In operation, as the output of the photosensor 17B becomes zero because the beam of light emitted from the light emitting portion 17A is interrupted by the cassette C, a reversible motor 11 rotates in the forward direction such that a drive gear 15 that drives the pulley of the transport belts 10A and 10B is rotated in the appropriate direction. The rotary power is transferred by the motor 11 through a worm-gear 12, a worm-wheel 13 and an intermediate gear 14 in order to obtain the appropriate direction of rotation of the gear 15, shown as F in this example. The motor 11 and the gear train 12, 13, 14 and 15 are mounted in the block A of Figure 3.

Thus, the cassette C is taken into the cassette receiving portion 6A of the transfer device 6 and, once the rear end of the cassette C has passed the position defined by the light emitting portion 17A and the photosensor 17B, the motor 11 will be stopped, and the carrying-in operation of the cassette C will be stopped. The sensors 18A and 18B operate in a similar fashion such that if the front end of the carried-in cassette C breaks the beam of light emitted from light emitting portion 18A, then the output of the photosensor 18B will go to zero and thereby cause the motor 11 to rotate in the reverse direction, such that the cassette C is kept in the normal position for being housed.

The sensors 17A, 17B and 18A, 18B can be spaced apart so that they can be commonly used for the two cassette receiving portions 6a and 6B, because only one of the two tiers is in an operating mode at any one time.

Although not shown, further sensors are provided in the receiving portion within the transferring device 6 that sense the presence or absence of a cassette C therein and constantly provide information as to in which of the two tier portions of the cassette receiving portions 6A and 6B a cassette C is inserted.

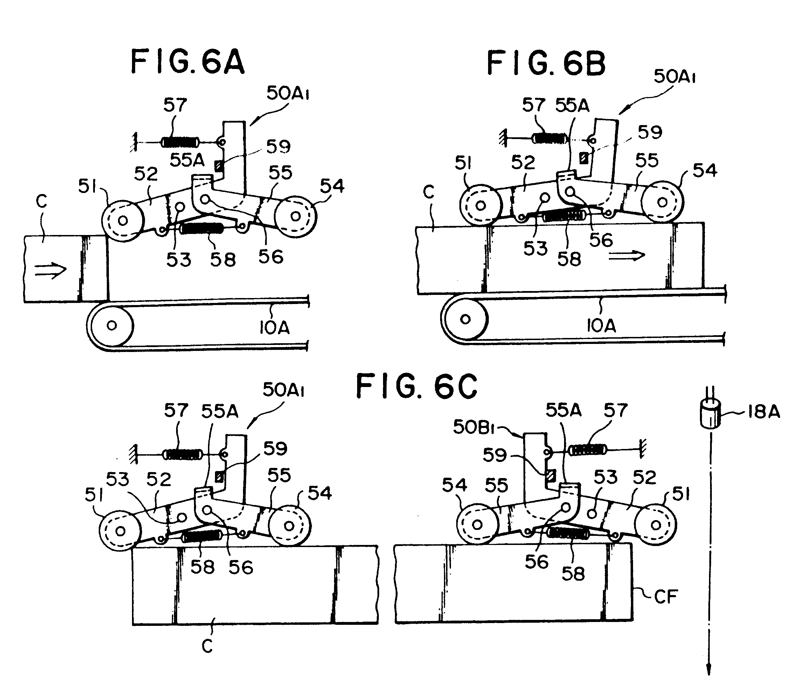

Figures 6A to 6C are diagrammatic representations for explaining the operation of the cassette presser members 50 that are used to press the cassette C against the transport belts. As seen in Figure 3, there are generally four such presser members 50 available for each of the cassette receiving portion 6A and 6B, and each cassette presser member 50 is formed of a first arm 52 supporting a roller 51, which was denoted R In Figure 3. The first arm 52 is pivotally supported about a shaft 53 affixed to a plate of the overall frame (not shown) and a second arm 55 supports a roller 54 and is also pivotally supported about a shaft 56 that is mounted on the first arm 52. The first arm 52 is urged in a counter-clockwise direction about the shaft 53 by means of a spring 57, and a second spring 58 is stretched between the first arm 52 and a second arm 55. Therefore, as a cassette C is inserted onto the carrying-in transport belt 10A in the direction of the arrow in he procedure described with reference to Figure 5, the roller 51 is first rotated against the tension of the spring 57, as shown in Figure 6A, and the upper end of the first arm 52 moves away from a stop 59 by being forced to rotate in a clockwise direction. Thereby, the protruding end 55A or the second arm 55, which is in engagement with the first arm 52, is caused to move slightly downward as the first arm 52 rotates about the shaft 53. As the cassette C advances into the cassette receiving portion, the roller 54 also presses on the top face of the cassette C through the action of the spring 58, as shown in Figure 6B. Therefore, as the cassette C is carried into the cassette receiving portion it is fully pressed against the transport belt 10A. When the cassette C has been completely carried into the cassette receiving portion and the transport belt 10A is caused to stop, as described above, the roller 51 will fall over the rear edge of the cassette C, as represented in Figure 6C. This acts to keep the cassette C from coming out of the cassette receiving portion when the transferring device 6 is driven along the X or Y-axis, as shown in Figure 1. Because there are two cassette presser members 50 for the front and back of the cassette C, then the other presser member 50B1 will act to prevent the cassette C from coming out of the other end of the cassette receiving portion during movement of the cassette transferring device 6.

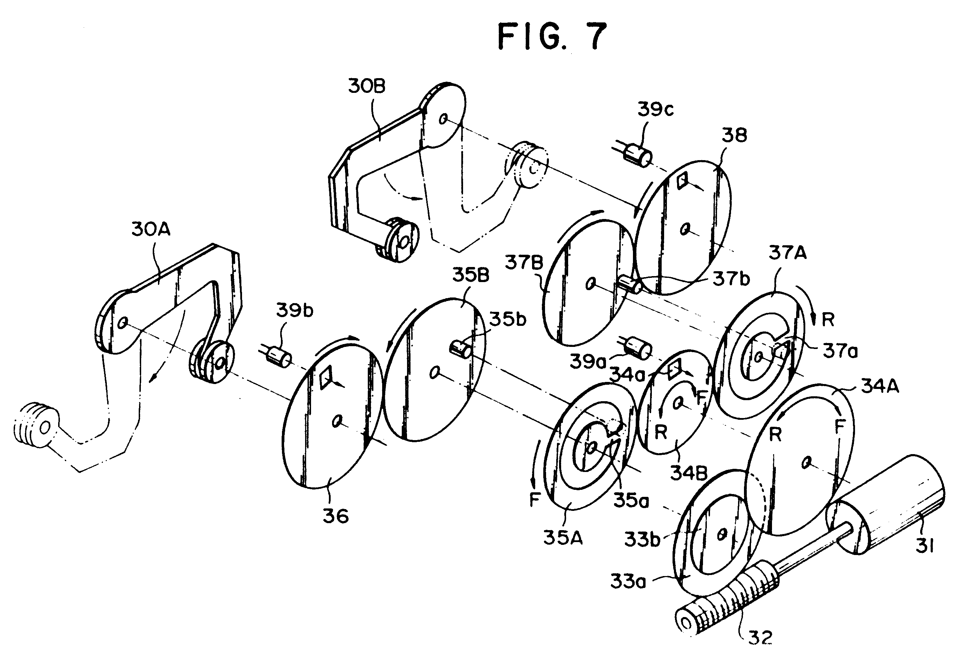

The push-out lever mechanism and the drive therefor are shown in detail in Figure 7, in which the push-out levers 30A and 30B that are used for discharging the cassette C housed in the transferring device 6 into the appropriate bin A, B, C, ... n of the block 3 or 4 are shown. A reversible motor 31 is provided with a worm-gear 32 that meshes with a worm-wheel 33a, which has a gear 33b firmly affixed thereto, and a first drive gear 34A meshes with the gear 33b. A second drive gear 34B is coaxially and rigidly connected to the first drive gear 34A and is engaged with two reversing gears 35A and 37A. Coaxially arranged with the first reversing gears 35A and 37A are second reversing gears 35B and 37B, respectively, which are coaxially arranged relative to the first reversing gears 35A and 37A, but are loosely fitted on the coaxial shafts and are arranged such that the pins 35b and 37b affixed to the reversing gears 35B and 37B, respectively can fit into circumferential slots and abut ribs 35a and 37a formed in the first reversing gears 35A and 37A, respectively. The second reversing gears 35B and 37B mesh with drive gears 36 and 38, respectively, and the push-out levers 30A and 30B are attached for mutual rotation with the drive gears 36 and 38, respectively.

The operation of the push-out lever system and the driving mechanism is such that a cassette C can be pushed out of the transferring device 6 into a bin or VTR 1 in either direction. For example, when a cassette C arranged in the tranferring device 6 is moved to be loaded into a specified VTR, the cassette C in the cassette receiving portion is first discharged by the above-described transport belt to a predetermined position and when a beam of light from the light emitting portion 17A is received by the photosensor 17B the motor 31 is energized. As the motor 31 rotates in the forward direction, the power is transmitted through the worm-gear 32, the worm-wheel 33a and the gear 33b, the first drive gear 34A and the second gear 34B, to the gears 34A and 34B that are rotated in the direction F in Figure 7. Then, the first reversing gear 35A is rotated in the direction F and the second reversing gear 35B is rotated with the first reversing gear because the pin 35B is abutting the rib 35a formed on the first reversing gear 35A. As a result, the push-out lever 30A is rotated in a clockwise direction by the action of the drive gear 36 and the rear end portion of the cassette C is thereby pushed to cause the cassette C to exit the cassette receiving portion. Thus, a cassette C having a rear end portion barely retraining in the receiving portion of the transferring device 6 is pushed all of the way into the cassette delivery mechanism or into the bin, so that the cassette C is completely discharged from the cassette receiving portion.

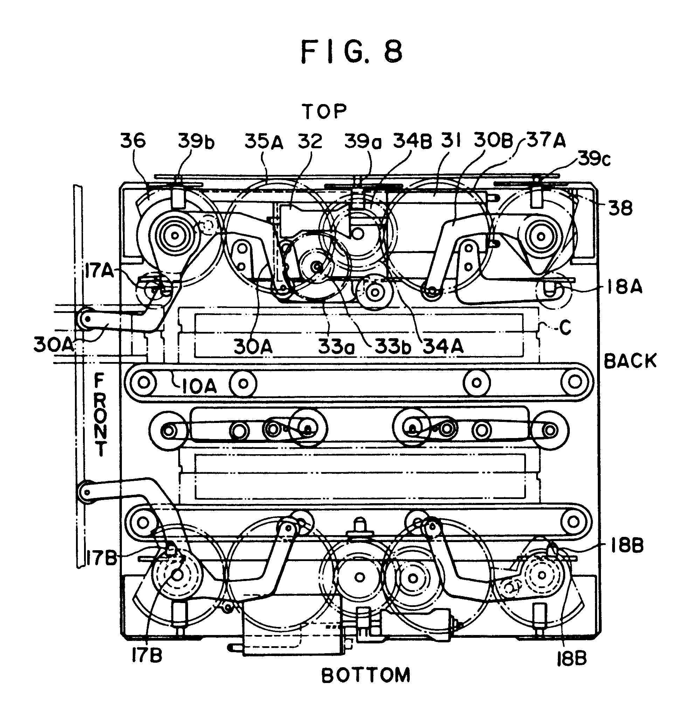

The elements shown in Figure 7 in an exploded view, are shown in Figure 8 in an actual assembly of these elements into a prototype structure. Note that the push-out lever 30A is shown in two positions, that is the retracted position when the cassette C is residing within the cassette receiving portion and in the extended position in which it is rotated clockwise to push the cassette C the last part of the way out of the cassette receiving portion. Both the upper and lower tiers of the transferring device 6, corresponding respectively to 6A and 6B in Figure 1, are shown in Figure 8.

Turning back to Figure 7, it is seen that at the time the push-out lever 30A is rotated clockwise, the first reversing gear 37A that drives the other push-out lever 30B is also rotated in a counter-clockwise direction but because the rib 37a rotates in the direction going away from the pin 37b, the second reversing gear 37B will undergo no rotation and will remain in its at-rest position. Thus, the other push-out lever 30B undergoes no rotary motion.

The cassette push-out operation is performed by a full rotation of the first drive gear 34A that is firmly affixed to the drive gear 35B, hence, a light sensor 39a senses the light at the time of the start of rotation and senses light again at the conclusion of a full rotation of the gear 34B. Another light sensor 39b that senses the position of the push-out lever 30A will be off due to rotation of the drive gear 36, and the motor 31 will be actuated to drive in a reverse direction. Then, after a full reverse rotation has been made, the sensor 39a will once again sense light and turn on, and at the same time the sensor 39b will also be turned on. Thus, the home position is detected and the motor 31 is stopped.

When the cassette C housed in the transferring device 6 is to be discharged to the other side, that is, to the block 4, for example, the push-out lever 30B is used. As in the explanation above, the cassette C is first pushed out in the other direction by means of the transport belts 10A or 10B and when the light from the light emitting portion 18A is received by the photosensor 18B, the motor 31 will be driven to rotate in a reverse direction. In this mode, the first reversing gear 37A and the second reversing gear 37B will be rotated and thereby the push-out lever 30B is rotated into the position indicated by the dotted line in Figure 7, and after the cassette C has been completely discharged from the cassette receiving portion the push-out lever 30B will be returned to its home position, which can be detected by the sensors 39a and 39c. Because the rotational operation during the movement of the second push-out lever 30B are the same as the first push-out lever 30A, a further description is not needed.

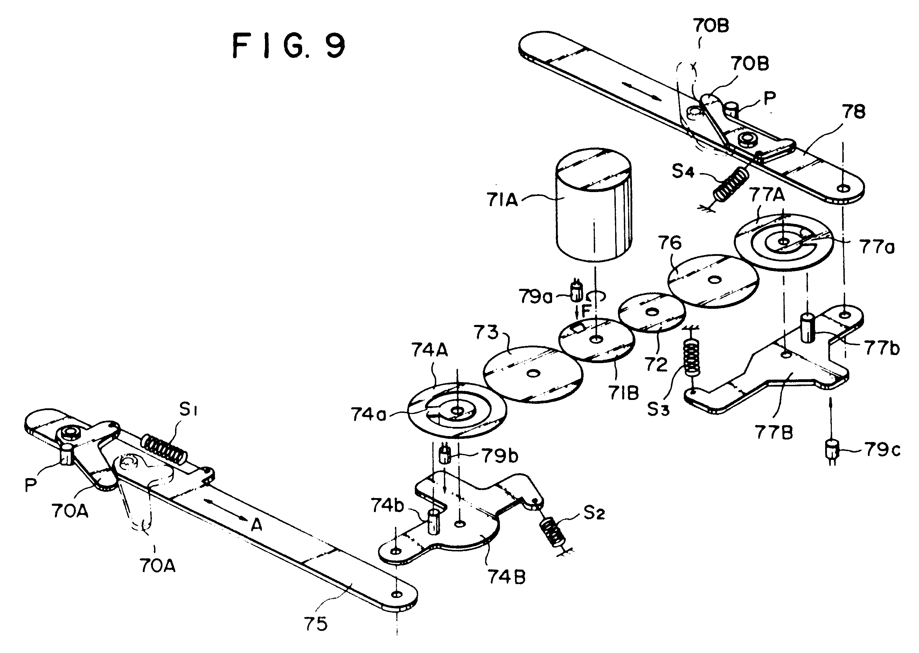

Figure 9 is an exploded perspective of the kick lever drive mechanism that is used to release the cassettes C from the bins by means of the kick levers 70A and 70B that are provided on the top face of the block H in Figure 1. A reversible motor 71A is provided to drive a drive gear 71B that is engaged with a reversing gear 72. The rotation of the drive gear 71B is also transmitted through an intermediate gear 73 to a lost-motion gear 74A and to a drive arm 74B provided coaxially therewith. By means of the drive arm 74B, a slide plate 75 that is pivotally attached to the drive arm 74B is moved in a longitudinal direction A. The kick lever 70A is pivotally supported on the movable slide plate 75.

Rotation of the reversing gear 72 is arranged through an intermediate gear 76, the lost-motion gear 74A and a drive arm 77B to move another slide plate 78 in a direction A. The lost-motion gears 74A and 77A are provided with circumferential slots and ribs 74a and 77a, respectively, and drive arms 74B and 77B are provided with pins 74b and 77b, respectively, which are arranged to protrude into the slots and to abut the ribs 74a and 77a. Thus, when the motor 71 rotates in a normal direction F in Figure 9, the lost-motion gear 74A rotates counter-clockwise such that the rib 74a pushes the pin 74b and, thus, the drive arm 74B also rotates counter-clockwise against the action of a spring S2 and the slide plate 75 is moved in the direction A. Motion of the slide plate 75 then causes the kick lever 70A that is pivotally supported by the slide plate 75 and which has been abutting a stop pin P to be rotated in a clockwise direction by action of a spring S1, thereby causing the tip of the kick lever to be projected outwardly relative to the slide plate 75, as represented in dashed lines in Figure 9.

At this time, the intermediate gear 76 that is engaged with the reversing gear 72 is rotated and the lost-motion gear 77A is also rotated. Nevertheless, because its rotation is in the clockwise direction the rib 77a moves in a direction away from the pin 77b and the drive arm 77B does not rotate. Thus, the drive arm 77B undergoes no rotational forces, and the other kick lever 70B remains in a position as indicated by the solid lines in Figure 9. Nevertheless, if the motor 71A is caused to rotate in a reverse direction, the lost-motion gear 77A is rotated counter-clockwise and, thus, the pin 77a is rotated counter-clockwise by means of the rib 77a, such that the slide 78 is moved by action of the drive arm 77B in the direction A. As a result, the kick lever 70B that was at rest in abutment against a stop element p is separated from the stop element P and at the same time the kick lever 70B is rotated clockwise by action of a spring S4 that urges the kick lever 70B outwardly in the clockwise direction.

Photoelectric sensors 79a, 79b, 79c sense the rotational positions of the drive gear 71B and the drive arms 74B and 77B respectively. Thus, when all the sensors 79 are off it indicates that all of the above elements are in their home positions. When the kick lever 70a is driven, the sensors 79b and 79a are turned from off to on, and at that point the motor 71A is reversed so that the elements are restored to their home positions. If the kick lever 70b is driven, the sensors 79c and 79a are turned from off to on, and at this point the motor 71A is rotated in its normal direction so that the elements are restored to their home positions.

Referring back to Figure 3, attention is directed to the provision of the elongated slot or opening 85 in the side wall housing of the assembly. This opening 85 is provided so that the bar code indicating the number, title and the like of the cassette C inside can be read by means of the bar-code reader assembly 80. The use of such bar-code readers in a system such as this is known, but normally the bar-code sensor 84 is firmly affixed to the assembly and reads the code as the cassette C is moved through the cassette receiving portion 6A or 6B. Although only one is shown, a reader assembly is provided for each cassette receiving portion 6A and 6B. In the present case the position of the bar-code sensor 84 is controlled by means of the belt 83 and the pulleys 81 and 82 to take a home position on the side of the cassette receiving portion 6A or 6B at which the cassette C is carried in, and it is arranged to read the bar code recorded on a side face of the cassette C that is taken onto the transport belt 20A and 20B as described above.

A problem has been found, however, in that when the side face of the cassette C is dirty or the carrying-in speed varies, it becomes impossible to read the bar code correctly at the time the cassette C is being received into the transferring device 6. Therefore, if the bar code cannot be read by the sensor when it is in its home position and the correct bar code data cannot be fed to the computer, a drive motor (not shown) is driven to move the pulleys 81 and 82 back and forth so that the bar code of the cassette C housed in the cassette receiving portion 6B can be scanned by the bar-code sensor 84 through the opening 85. The bar-code sensor 84 can also be laterally transported to an appropriate position which is close to the bin from which the cassette C is being transported. Thus, only a single bar-code sensor need be provided to accommodate the entry and exit of the cassettes C into the cassette receiving portion 6B from either side, that is, either from the bins of the block 3 or the block 4.

## Claims

1. Apparatus for automatically supplying and selectively reproducing a cassette (C), the apparatus comprising:
a plurality of reproducing and/or recording units (1);
first and second housing blocks (3, 4) each of which includes a plurality of cassette bins for storing cassettes (C); and
a cassette transporting device (6) movable between said first and second housing (3, 4) blocks for transporting said cassettes (C) between said cassette bins of said first and second housing blocks (3, 4) and between said cassette bins and said reproducing and/or recording units (1); said cassette transporting device (6) comprising: at least one cassette receiving portion (6A, 6B) having two inlets provided at opposing sides thereof, with said opposing sides facing said first and second cassette housing blocks (3, 4);
characterized in that said cassette transporting device (6) further comprises carrying means (10A, 10B, 20A, 20B) for carrying a cassette (C) into and out of said cassette receiving portion (6A, 6B) through said inlets; and
pushing means (30A, 30B, 40A, 40B) for pushing out a cassette (C) housed in said cassette receiving portion (6A, 6B) through one of said inlets after the cassette (C) has been partially carried from said cassette receiving portion (6A, 6B) towards said inlets by said carrying means (10A, 10B, 20A, 20B).

2. Apparatus according to claim 1, wherein said carrying means (10A, 10B, 20A, 20B) includes drive belt means (10A, 10B, 20A, 20B) for linearly moving said cassette (C) between said inlets and are arranged to contact a flat surface of said cassette (C).

3. Apparatus according to claim 2, wherein said cassette transporting device (6) further comprises presser elements (50) arranged in juxtaposition to said drive belt means (10A, 10B, 20A, 20B) for contacting an opposite flat surface of said cassette (C) and for resiliently pressing against said opposite flat surface of said cassette (C), whereby said cassette (C) is maintained in contact with said drive belt means (10A, 10B, 20A, 20B).

4. Apparatus according to claim 3, wherein said presser elements (50) include elongate arms (52, 55) having roller elements (51) at the ends of said elongate arms (52, 55) and further include spring elements (57, 58) for biasing said arms (52, 55) into contact with said opposite flat surface of said cassette (C).

5. Apparatus according to claim 1, wherein said pushing means (30A, 30B, 40A, 40B) includes pivotally arranged push-out arms (30A, 30B, 40A, 40B) for contacting a rear surface of said cassette (C) relative to said inlet through which said cassette (C) is pushed out, and means (31) for providing a driving force to said push-out arms (30A, 30B, 40A, 40B), whereby the driving force is transferred to said cassette (C).

6. Apparatus according to claim 5 wherein said pushing means (30A, 30B, 40A, 40B) further comprises sensor elements (17A, 17B, 18A, 18B) for sensing a front and rear edge of said cassette (C) relative to said inlet through which said cassette (C) passes as said cassette (C) is carried out of or into said cassette receiving portion (6A, 6B).

7. Apparatus according to claim 1, wherein said cassette transporting device (6) further comprises a kick element (70A, 70B) arranged adjacent to the inlets of said cassette receiving portion (6A, 6B) and pivotally mounted to be driven outwardly, thereby releasing a cassette (C) from a said cassette bin.

## Patentansprüche

1. Vorrichtung zur automatischen Belieferung und wahlweisen Wiedergabe einer Kassette (C), wobei die Vorrichtung umfaßt: eine Vielzahl von Wiedergabe und/oder Aufzeichnungseinheiten (1); einen ersten und zweiten Aufnahmeblock (3,4), wobei jeder eine Vielzahl von Kassettenfächern zur Speicherung der Kassetten (C) aufweist; und
eine Kassettentransporteinrichtung (6), die zwischen dem ersten und zweiten Aufnahmeblock (3,4) zum Transport der Kassetten (c) zwischen den Kassettenfächern des ersten und zweiten Aufnahmeblocks (3,4) und zwischen den Kassettenfächern und den Wiedergabe- und/oder Aufzeichnungseinheiten (1) bewegbar ist; wobei die Kassettentransporteinrichtung (6)umfaßt: zumindest einen Kassettenaufnahmebereich (6A,6B), der zwei Einlässe aufweist, die auf dessen gegenüberliegenden Seiten vorgesehen sind, wobei sich die gegenüberliegenden Seiten am ersten und zweiten Kassettenaufnahmeblock (3,4) gegenüberstehen;
dadurch gekennzeichnet, daß die Kassettentransporteinrichtung (6) weiterhin Transportmittel (10A,10B,20A,20B) zur Beförderung einer Kassette (C) in und aus einem Kassettenaufnahmebereich (6A,6B) über die Einlässe aufweist; und
Antriebsmittel (30A,30B,40A,40B) zum Ausstoß einer Kassette (C), die im Kassettenaufnahmebereich (6A,6B) untergebracht ist, durch einen der Einlässe, nach dem die Kassette (C) teilweise vom Kassettenaufnahmebereich (6A,6B) zu den Einlässen durch die Transportmittel (10A,10B,20A,20B) befördert wurde.

2. Vorrichtung nach Anspruch 1, wobei die Transportmittel (10A,10B,20A,20B) Antriebsbänder (10A,10B,20A,20B) zur gleichmäßigen Beförderung der Kassette (C) zwischen den Einlässen aufweisen und so angeordnet sind, daß sie eine flache Oberfläche einer Kassette (C) berühren.

3. Vorrichtung nach Anspruch 2, wobei die Kassettentransporteinrichtung (6) weiterhin Andruckelemente (50) aufweist, die nebeneinander an den Antriebsbändern (10A,10B,20A,20B) angeordnet sind, um eine gegenüberliegende flache Oberfläche der Kassette (C) zu kontaktieren und um federnd auf die gegenüberliegende flache Oberfläche der Kassette (C) zu drücken, wodurch die Kassette (C) in Kontakt mit den Antriebsbändern (10A,10B,20A,20B) gehalten wird.

4. Vorrichtung nach Anspruch 3, wobei die Andruckelemente (50) verlängerte Arme (52,55) aufweisen, die Rollen (51) an den Enden der verlängerten Arme (52,55) tragen und weiterhin Federelemente (57,58) aufweisen, um die Arme (52,55) derart zu beeinflussen, daß sie in Kontakt mit der gegenüberliegenden flachen Oberfläche der Kassette (C) treten.

5. Vorrichtung nach Anspruch 1, wobei die Antriebsmittel (30A,30B,40A,40B) drehbar angeordnete Ausstoßarme (30A,30B,40A,40B) aufweisen, um eine hintere Oberfläche der Kassette (C) in Bezug auf den Einlaß zu kontaktieren, durch den die Kassette (C) ausgestoßen wird, sowie Mittel (31) zum Vorsehen einer Antriebskraft für die Ausstoßarme (30A,30B,40A,40B), wodurch die Antriebskraft zur Kassette (C) übertragen wird.

6. Vorrichtung nach Anspruch 5, wobei die Ausstoßmittel (30A,30B,40A,40B) weiter Sensorelemente (17A,17B,18A,18B) zur Ermittlung des vorderen oder hinteren Endes der Kassette (C) bezüglich des Einlasses aufweist, durch den die Kassette (C) läuft, wenn die Kassette (C) aus dem oder in den Kassettenaufnahmebereich (6A,6B) befördert wird.

7. Vorrichtung nach Anspruch 1, wobei die Kassettentransporteinrichtung (6) weiterhin ein Kick-Element (70A,70B) aufweist, das bei den Einlässen des Kassettenaufnahmebereichs (6A,6B) angeordnet ist, und drehbar montiert ist, um nach außen angetrieben zu werden, wodurch eine Kassette (C) aus einem Kassettenfach freigegeben wird.

## Revendications

1. Appareil destiné à avancer automatiquement et à reproduire de manière sélective une cassette (C), l'appareil comportant :
plusieurs unités de reproduction et/ou d'enregistrement (1);
des premier et deuxième blocs de rangement (3, 4) qui comprennent chacun plusieurs bacs de cassettes destinés à ranger des cassettes (C); et
un dispositif de transport de cassette (6) mobile entre lesdits premier et deuxième blocs de rangement (3, 4) afin de transporter lesdites cassettes (C) entre lesdits bacs de cassettes desdits premier et deuxième blocs de rangement (3, 4) et entre lesdits bacs de cassettes et lesdites unités de reproduction et/ou d'enregistrement (1); ledit dispositif de transport de cassette (6) comportant :
au moins une partie de réception de cassette (6A, 6B) ayant deux entrées prévues sur des côtés opposés de celle-ci, avec lesdits côtés opposés faisant face aux dits premier et deuxième blocs de rangement de cassettes (3, 4);
caractérisé en ce que ledit dispositif de transport de cassette (6) comporte en outre des moyens de transport (10A, 10B, 20A, 20B) destinés à transporter une cassette (C) dans et hors de ladite partie de réception de cassette (6A, 6B) en passant par lesdites entrées; et
des moyens de poussée (30A, 30B, 40A, 40B) destinés à pousser vers l'extérieur une cassette (C) logée dans ladite partie de réception de cassette (6A, 6B) en passant par une desdites entrées une fois que la cassette (C) a été partiellement transportée de ladite partie de réception de cassette (6A, 6B) vers lesdites entrées par lesdits moyens de transport (10A, 10B, 20A, 20B).

2. Appareil selon la revendication 1, dans lequel lesdits moyens de transport (10A, 10B, 20A, 20B) comprennent des moyens de courroie d'entraînement (10A, 10B, 20A, 20B) destinés à déplacer linéairement ladite cassette (C) entre lesdites entrées et sont disposés de façon à venir en contact avec une surface plate de ladite cassette (C).

3. Appareil selon la revendication 2, dans lequel ledit dispositif de transport de cassette (6) comporte des éléments de pression (50) disposés en juxtaposition avec lesdits moyens de courroie d'entraînement (10A, 10B, 20A, 20B) afin de venir en contact avec une surface plate opposée de ladite cassette (C) et afin de d'appuyer de manière élastique sur ladite surface plate opposée de ladite cassette (C), ladite cassette (C) étant ainsi maintenue en contact avec lesdits moyens de courroie d'entraînement (10A, 10B, 20A, 20B).

4. Appareil selon la revendication 3, dans lequel lesdits éléments de pression (50) comprennent des bras allongés (52, 55) ayant des éléments de galet (51) aux extrémités desdits bras allongés (52, 55) et comprennent en outre des éléments de ressort (57, 58) destinés à rappeler lesdits bras (52, 55) en contact avec ladite surface plate opposée de ladite cassette (C).

5. Appareil selon la revendication 1, dans lequel lesdits moyens de poussée (30A, 30B, 40A, 40B) comprennent des bras de poussée disposés de façon pivotante (30A, 30B, 40A, 40B) afin de venir en contact avec une surface arrière de ladite cassette (C) par rapport à ladite entrée à travers laquelle ladite cassette (C) est poussée, et des moyens (31) destinés à fournir une force d'entraînement aux dits bras de poussée (30A, 30B, 40A, 40B), la force d'entraînement étant ainsi transférée à ladite cassette (C).

6. Appareil selon la revendication 5, dans lequel lesdits moyens de poussée (30A, 30B, 40A, 40B) comprennent des éléments de détection (17A, 17B, 18A, 18B) destinés à détecter un bord avant et arrière de ladite cassette (C) par rapport à ladite entrée à travers laquelle ladite cassette (C) passe lorsque ladite cassette (C) est transportée hors de ou dans ladite partie de réception de cassette (6A, 6B).

7. Appareil selon la revendication 1, dans lequel ledit dispositif de transport de cassette (6) comporte en outre un élément de poussée (70A, 70B) prévu de façon adjacente aux entrées de ladite partie de réception de cassette (6A, 6B) et monté de façon pivotante afin d'être entraîné vers l'extérieur, libérant ainsi une cassette (C) dudit bac de cassette.
